# FASCICULE DE BREVET EUROPEEN

(11) **EP 1 790 523 B1**
(45) Date de publication et mention de la délivrance du brevet: **10.12.2008**
(21) Numéro de dépôt: 06301031.8
(22) Date de dépôt: 10.10.2006
(51) Int. Cl.: B60N 2/06, B60N 2/30

(54) **Siège modulable, 2eme ou 3eme rang**
Modulierbarer Sitz der 2. oder 3. Reihe
Modulable seat for 2nd or 3rd row

(30) Priorité: 28.11.2005 FR 0553625
(43) Date de publication de la demande: 30.05.2007
(73) Titulaire: Renault, 92109 Boulogne Billancourt (FR)
(72) Inventeur: Masson, Xavier M., 78310 Maurepas (FR)

(56) Documents cités:
- EP-A- 0 322 930
- EP-A- 0 331 241
- FR-A- 2 735 081
- FR-A- 2 774 644
- US-B1- 6 899 367

## Description

La présente invention se rapporte au domaine des sièges de véhicules automobiles, et concerne, plus particulièrement, les sièges modulables de deuxième ou troisième rang pouvant être déplacés latéralement dans l'habitacle, notamment pour des véhicules de type monospace.

On connaît, par exemple par le document FR2735081, un siège arrière d'un véhicule automobile dont l'assise comporte, d'une part, au moins une patte montée pivotante et coulissante sur un axe transversal du véhicule et solidaire du plancher dudit véhicule, et, d'autre part, dans sa partie arrière, au moins un verrou de maintien dudit siège dans la position désirée. Un tel dispositif permet de déplacer latéralement le siège, par exemple pour permettre un accès facilité à la zone située à l'arrière ou pour augmenter le volume de celle-ci : rangement d'objets volumineux dans le coffre du véhicule, ou, pour un véhicule comportant trois rangées de sièges, accès plus facile à la troisième rangée.

Un tel dispositif, toutefois, implique la mise en place d'un élément transversal sur le plancher du véhicule, ce qui peut nuire à l'esthétique de l'habitacle, et limiter la modularité longitudinale au sein de celui-ci.

On connaît également, par exemple par le document EP0331241, un siège formé de deux demi sièges reliés entre eux par un guide transversal, dans lequel l'un des demi sièges peut être déplacé relativement à l'autre au moyen d'un ensemble de rails coulissants dans ce guide, pour dégager, entre les deux dits demi sièges, un espace pouvant accueillir une troisième assise et un troisième dossier. Le guide transversal comporte ici au moins deux pieds engagés chacun dans un rail longitudinal permettant de régler la position longitudinale de l'ensemble dans le véhicule. Un tel dispositif est toutefois d'une réalisation mécanique relativement complexe par le nombre de pièces qu'il comporte (rails, guide, ...). On pourra aussi se référer au document EP0322930, correspondant au préambule de la revendication 1 et traitant de sièges coulissants pour des avions.

La présente invention a pour but de proposer un dispositif simple, peu coûteux, et peu encombrant, permettant de déplacer transversalement, dans un véhicule, un siège de deuxième ou de troisième rangée arrière.

L'invention atteint son but grâce à un siège selon la revendication 1.

Avantageusement, ladite barre transversale s'étend sensiblement sur toute la largeur du siège, de telle manière que le siège selon l'invention est mobile transversalement entre une première position dans laquelle un premier moyen de liaison de la barre transversale à l'assise est en butée contre une première extrémité de ladite au moins une partie tubulaire, et une seconde position dans laquelle un second moyen de liaison de la barre transversale à l'assise est en butée contre l'extrémité opposée de ladite au moins une partie tubulaire.

Avantageusement, un carter placé autour de la partie inférieure de l'assise du siège selon l'invention permet de réaliser un habillage dissimulant le mécanisme de déplacement transversal dudit siège.

Selon un mode de réalisation préféré, les éléments de sécurité du siège selon l'invention, tels que, par exemple, éléments de la ceinture de sécurité, sont placés sur le support liant le siège au plancher, au plus près de l'assise dudit siège.

Avantageusement, ledit support est un ensemble mécano soudé.

Selon différents modes de réalisation, l'invention peut également présenter une ou plusieurs des caractéristiques suivantes :
- le déplacement transversal du siège selon l'invention peut être manuel ou commandé par un moteur électrique,
- un dispositif de blocage approprié permet le blocage du siège dans une position transversale déterminée.

D'autres caractéristiques et avantages de l'invention ressortiront à la lecture de la description qui suit, en référence aux figures annexées dans lesquelles :
- la figure 1 est une vue schématique de face de l'assise d'un siège selon l'invention et de son mécanisme de déplacement transversal,
- la figure 2 est une vue schématique de côté d'un siège selon l'invention.

Un siège S, ainsi que le présentent les figures, comporte classiquement une assise 1 et un dossier 2. De manière connue, le siège S est relié au plancher P du véhicule par un support 3 dont au moins un pied 4 est apte à être engagé dans un rail 5 placé longitudinalement sur le plancher P et à coulisser dans ledit rail P, de manière à permettre le réglage longitudinal de la position du siège S dans l'habitacle du véhicule.

Le support 3 d'un siège S selon l'invention comporte, dans sa partie supérieure la plus proche de l'assise 1 dudit siège S, au moins une partie sensiblement tubulaire 6, transversale, dans laquelle une barre 7, placée transversalement sous ladite assise 1 et liée de manière rigide à celle-ci par des moyens appropriés 8, est apte à coulisser. Selon un mode de réalisation préféré de l'invention, présenté par les figures, la barre transversale 7 s'étend sensiblement sur toute la largeur de l'assise 1 du siège S, et est liée de manière rigide au cadre 9 de ladite assise 1 par deux joues 8 et 8' placées respectivement à chacune des extrémités de ladite barre transversale 7 et rapportées sur ledit cadre 9 de l'assise 1. Par exemple et de manière non limitative, la barre transversale 7 peut être insérée entre deux plaques 8 et 8' rapportées par soudure sur la face inférieure du cadre 9 de l'assise 1, sensiblement perpendiculairement à ladite face inférieure ; chacune des extrémités de la barre transversale 7 traversant un orifice approprié ménagé dans chacune desdites plaques 8, 8', et ladite barre transversale 7 étant bloquée, par des moyens appropriés (non représentés sur les figures : pions, goujons, butées, ...), entre les deux dites plaques 8 et 8'.

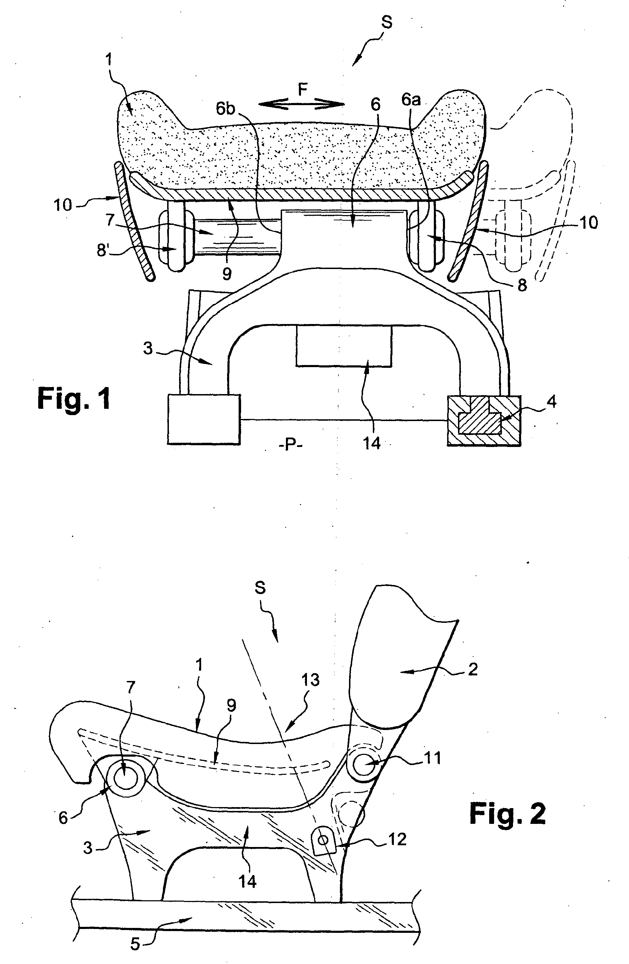

L'assise 1 (donc, le siège S) peut ainsi coulisser transversalement dans la partie sensiblement tubulaire 6 du support 3, entre une première position extrême dans laquelle l'une des joues 8 est en butée contre une première extrémité 6a de ladite partie tubulaire 6, et une seconde position extrême dans laquelle l'autre joue 8' est en butée contre l'extrémité opposée 6b de ladite partie sensiblement tubulaire 6 : la seconde position extrême est représentée en traits discontinus sur la figure 1, et le sens de déplacement transversal indiqué par la double flèche F sur la même figure. Avantageusement, ce coulissement est réalisé manuellement par l'utilisateur, mais il peut également, selon des modes alternatifs de réalisation de l'invention, être obtenu au moyen d'un moteur électrique approprié.

L'invention permet donc un coulissement transversal simple et rapide d'un siège arrière S d'un véhicule automobile par rapport à son support 3 dans l'habitacle dudit véhicule. La course transversale maximale autorisée étant sensiblement égale à la largeur du cadre 9 de l'assise 1 dudit siège S, ce coulissement permet essentiellement de déplacer ledit siège S transversalement, afin, par exemple et de manière non limitative, de permettre l'accès à un siège de troisième rang, sans basculement et manipulation lourde dudit siège S, ou de permettre un déplacement longitudinal plus facile dudit siège S, en offrant la possibilité d'éviter ponctuellement d'éventuels obstacles latéraux (objets entreposés, ...).

Il est à noter que, selon des modes de réalisation alternatifs de l'invention, un dispositif approprié (non représenté sur les figures) peut permettre le verrouillage d'une ou plusieurs positions transversales du siège S par rapport à son support 3.

Selon un mode de réalisation préféré de l'invention, représenté par les figures, un carter 10 s'étend, autour de l'assise 1 du siège S, sensiblement à partir du cadre inférieur 9 de l'assise 1, vers le support 3, de manière à réaliser un habillage et à occulter de façon esthétique le mécanisme de coulissement transversal du siège S.

De manière connue, et ainsi que le présente plus précisément la figure 2, le support 3 du siège S accueille le cadre 9 de l'assise 1 dudit siège S, ainsi que les mécanismes d'articulation 11 du dossier 2 sur ladite assise 1.

Avantageusement, le support 3 d'un siège S selon l'invention accueille également les dispositifs 12 de fixation des éléments de sécurité liés audit siège S : par exemple, et de manière non exhaustive, la fixation d'une ceinture de sécurité 13 (schématiquement évoquée par une ligne en traits discontinus sur la figure 2). Avantageusement également, selon un mode de réalisation tel que celui représenté par les figures, dans lequel le support 3 du siège S comporte quatre pieds 4, lesdits dispositifs de fixation 12 seront préférentiellement placés dans la partie supérieure d'un pied 4 situé à l'arrière dudit siège S. Un enrouleur 14 de ceinture de sécurité, schématiquement représenté en traits discontinus sur la figure 1, peut alors être placé sous le support 3, entre deux pieds arrière 4.

## Revendications

1. Siège (S) composé d'une assise (1) et d'un dossier (2), destiné à être placé à l'arrière, au deuxième ou au troisième rang d'un véhicule automobile de type monospace, dont l'assise (1) est reliée au plancher (P) dudit véhicule par un support (3) comportant au moins un pied (4) apte à être engagé dans un rail longitudinal (5) placé sur ledit plancher (P) pour déplacer longitudinalement ledit siège (S) dans l'habitacle dudit véhicule, dans lequel une barre transversale (7) s'étend sensiblement sous l'assise, ledit support (3) comportant au moins une partie tubulaire transversale (6) dans laquelle ladite barre transversale (7) est apte à coulisser, **caractérisé en ce que** la barre transversale (7) est liée de manière rigide à l'assise (1) par des moyens appropriés (8), (8') placés respectivement à chacune des extrémités de ladite barre transversale (7).

2. Siège (S) selon la revendication 1, **caractérisé en ce que** la barre transversale (7) s'étend sensiblement sur toute la largeur du cadre (9) de l'assise (1).

3. Siège (S) selon l'une ou l'autre des revendications 1 ou 2, **caractérisé en ce qu'**il est mobile transversalement entre une première position dans laquelle un premier moyen de liaison (8) de la barre transversale (7) est en butée contre une première extrémité (6a) de ladite au moins une partie tubulaire (6) du support (3), et une seconde position dans laquelle un second moyen de liaison (8') de la barre transversale (7) est en butée contre l'extrémité opposée (6b) de ladite au moins une partie tubulaire (6) du support (3).

4. Siège (S) selon l'une quelconque des revendications 1 à 3, **caractérisé en ce que** le coulissement de la barre transversale (7) dans la partie tubulaire (6) du support (3) est réalisé manuellement.

5. Siège (S) selon l'une quelconque des revendications 1 à 3, **caractérisé en ce que** le coulissement de la barre transversale (7) dans la partie tubulaire (6) du support (3) est obtenu au moyen d'un moteur électrique approprié.

6. Siège (S) selon l'une quelconque des revendications 1 à 5, **caractérisé en ce qu'**un carter (10) s'étend, autour de l'assise (1), sensiblement depuis la partie inférieure du cadre (9) de ladite assise (1) vers le support (3) en masquant la barre transversale (7) et ladite au moins une partie tubulaire (6) du support (3).

7. Siège (S) selon l'une quelconque des revendications 1 à 6, **caractérisé en ce que** le support (3) accueille les dispositifs de fixation (12) des éléments de sécurité (13) du siège (S).

8. Siège (S) selon l'une quelconque des revendications 1 à 7, **caractérisé en ce qu'**un dispositif approprié permet le verrouillage d'une ou plusieurs positions transversales de la barre transversale (7) dans ladite au moins une partie tubulaire (6) du support (3).

9. Véhicule automobile de type monospace équipé d'au moins un siège (S) de deuxième ou de troisième rang selon l'une quelconque des revendications 1 à 8.

## Claims

1. Seat (S), composed of a seat base (1) and a seat back (2), designed to be positioned in the rear, in the second or third row, of a people carrier-type motor vehicle, in which the seat base (1) is connected to the floor (P) of said vehicle by a bracket (3) having at least one leg (4) engageable in a longitudinal rail (5) positioned on said floor (P) for moving said seat (S) longitudinally in the passenger compartment of said vehicle, in which a transverse bar (7) extends generally underneath the seat base, and said bracket (3) has at least one transverse tubular part (6) through which said transverse bar (7) can slide, said seat being **characterized in that** the transverse bar (7) is connected rigidly to the seat base (1) by appropriate means (8), (8') positioned one at each end of said transverse bar (7).

2. Seat (S) according to Claim 1, **characterized in that** the transverse bar (7) extends across approximately the full width of the frame (9) of the seat base (1).

3. Seat (S) according to either of Claims 1 and 2, **characterized in that** it is movable transversely between a first position in which a first connecting means (8) of the transverse bar (7) abuts against a first end (6a) of said tubular part or parts (6) of the bracket (3), and a second position in which a second connecting means (8') of the transverse bar (7) abuts against the other end (6b) of said tubular part or parts (6) of the bracket (3).

4. Seat (S) according to any one of Claims 1 to 3, **characterized in that** the sliding of the transverse bar (7) through the tubular part (6) of the bracket (3) is done manually.

5. Seat (S) according to any one of Claims 1 to 3, **characterized in that** the sliding of the transverse bar (7) through the tubular part (6) of the bracket (3) is done by means of an appropriate electric motor.

6. Seat (S) according to any one of Claims 1 to 5, **characterized in that** a housing (10) extends around the seat base (1) approximately from the bottom of the frame (9) of said seat base (1) towards the bracket (3), concealing the transverse bar (7) and said tubular part or parts (6) of the bracket (3).

7. Seat (S) according to any one of Claims 1 to 6, **characterized in that** the fixing devices (12) of the safety components (13) of the seat (S) are mounted on the bracket (3).

8. Seat (S) according to any one of Claims 1 to 7, **characterized in that** an appropriate device allows the transverse bar (7) to be locked in one or more transverse positions in said tubular part or parts (6) of the bracket (3).

9. People carrier-type motor vehicle fitted with at least one second- or third-row seat (S) according to any one of Claims 1 to 8.

## Patentansprüche

1. Sitz (S), der aus einem Sitzteil (1) und einer Rückenlehne (2) besteht und hinten in der zweiten oder dritten Reihe eines Großraum-Kraftfahrzeugs angeordnet werden soll, dessen Sitzteil (1) durch eine Stütze (3), die mindestens einen Fuß (4) aufweist, der in eine auf dem Boden (P) angebrachte Längsschiene (5) in Eingriff gebracht werden kann, um den Sitz (S) in dem Innenraum des Fahrzeugs zu bewegen, mit dem Boden (P) des Fahrzeugs verbunden ist, wobei sich ein Querträger (7) im Wesentlichen unter dem Sitzteil erstreckt, wobei die Stütze (3) mindestens einen röhrenförmigen Querteil (6) aufweist, in dem der Querträger (7) gleiten kann, **dadurch gekennzeichnet, dass** der Querträger (7) durch geeignete Mittel (8), (8'), die jeweils an jedem der Enden des Querträgers (7) angeordnet sind, starr mit dem Sitzteil (1) verbunden ist.

2. Sitz (S) nach Anspruch 1, **dadurch gekennzeichnet, dass** sich der Querträger (7) im Wesentlichen über die ganze Breite des Rahmens (9) des Sitzteils (1) erstreckt.

3. Sitz (S) nach Anspruch 1 oder 2, **dadurch gekennzeichnet, dass** er zwischen einer ersten Position, in der sich ein erstes Verbindungsmittel (8) des Querträgers (7) in Anlage an einem ersten Ende (6a) des mindestens einen röhrenförmigen Teils (6) der Stütze (3) befindet, und einer zweiten Position, in der sich ein zweites Verbindungsmittel (8') des Querträgers (7) in Anlage an dem gegenüberliegenden Ende (6b) des mindestens einen röhrenförmigen Teils (6) der Stütze (3) befindet, in Querrichtung beweglich ist.

4. Sitz (S) nach einem der Ansprüche 1 bis 3, **dadurch gekennzeichnet, dass** das Verschieben des Querträgers (7) in dem röhrenförmigen Teil (6) der Stütze (3) manuell erfolgt.

5. Sitz (S) nach einem der Ansprüche 1 bis 3, **dadurch gekennzeichnet, dass** das Verschieben des Querträgers (7) in dem röhrenförmigen Teil (6) der Stütze (3) mittels eines geeigneten Elektromotors bewerkstelligt wird.

6. Sitz (S) nach einem der Ansprüche 1 bis 5, **dadurch gekennzeichnet, dass** sich ein Gehäuse (10) im Wesentlichen von dem unteren Teil des Rahmens (9) des Sitzteils (1) um den Sitzteil (1) herum zur Stütze (3) erstreckt und dabei den Querträger (7) und den mindestens einen röhrenförmigen Teil (6) der Stütze (3) verdeckt.

7. Sitz (S) nach einem der Ansprüche 1 bis 6, **dadurch gekennzeichnet, dass** die Stütze (3) die Befestigungsvorrichtungen (12) für die Sicherheitselemente (13) des Sitzes (S) aufnimmt.

8. Sitz (S) nach einem der Ansprüche 1 bis 7, **dadurch gekennzeichnet, dass** eine geeignete Vorrichtung das Verriegeln einer oder mehrerer Querpositionen des Querträgers (7) in dem mindestens einen röhrenförmigen Teil (6) der Stütze (3) gestattet.

9. Großraum-Kraftfahrzeug, das mit mindestens einem Sitz (S) der zweiten oder dritten Reihe nach einem der Ansprüche 1 bis 8 ausgestattet ist.
